(19) **Europäisches Patentamt**

**European Patent Office**

**Office européen des brevets**

(11) Veröffentlichungsnummer: **0 331 112**
**B1**

(12) **EUROPÄISCHE PATENTSCHRIFT**

(45) Veröffentlichungstag der Patentschrift: **23.01.91**

(21) Anmeldenummer: **89103507.3**

(22) Anmeldetag: **28.02.89**

(51) Int. Cl.⁵: **B 01 J 2/16, B 01 J 8/38**

(54) **Wirbelschichtapparatur, insbes. zum Granulieren pulverförmiger Substanz.**

(30) Priorität: **01.03.88 DE 3806543**

(43) Veröffentlichungstag der Anmeldung:
**06.09.89 Patentblatt 89/36**

(45) Bekanntmachung des Hinweises auf die
Patenterteilung:
**23.01.91 Patentblatt 91/04**

(84) Benannte Vertragsstaaten:
**AT BE CH DE ES FR GB IT LI LU NL SE**

(56) Entgegenhaltungen:
**DE-A-2 321 418**
**GB-A-2 021 968**
**US-A-4 724 794**

(73) Patentinhaber: **Hüttlin, Herbert**
**Daimlerstrasse 7**
**D-7853 Steinen (DE)**

(72) Erfinder: **Hüttlin, Herbert**
**Daimlerstrasse 7**
**D-7853 Steinen (DE)**

(74) Vertreter: **Goetz, Rupert, Dipl.-Ing. et al**
**Wuesthoff & Wuesthoff Patent- und**
**Rechtsanwälte Schweigerstrasse 2**
**D-8000 München 90 (DE)**

**Beschreibung**

Die Erfindung betrifft eine Wirbelschichtapparatur, insbes. zum Granulieren pulverförmiger Substanz, mit

einem Behälter, in dem ein Behandlungsraum für die Substanz und unterhalb davon eine Windkammer angeordnet ist, und

einem Rotor mit einer kreisförmigen Rotorscheibe, die die Windkammer nach oben begrenzt, um eine aufrechte zentrale Achse drehantreibbar ist und mindestens eine in ungefähr radialer Richtung langgestreckte Öffnung aufweist, die einen Gasstrom von der Windkammer in den Behandlungsraum zuläßt. Eine gattungsähnliche Wirbelschichtapparatur mit Siebboden ist im der Parallelanmeldung EP-A-0 331 111 (Prio 01.03.88) beschrieben.

Bei einer zu dieser Gattung gehörigen, aus der US 3849900 bekannten Wirbelschichtapparatur, die zum Trocknen von Partikeln vorgesehen ist, besteht der Rotor aus einer senkrechten Welle mit einer flachen kreisförmigen Scheibe. Diese hat einen etwas größeren Durchmesser als der Siebboden und weist zwei oder mehr kreissektorförmige Öffnungen auf. Der Siebboden gehört zu einem schubladenartigen Kasten, der aus dem Behälter herausziehbar und in seiner Betriebsstellung durch aufblasbare Schlauchdichtungen gegen den Behälter abgedichtet ist. Eine dieser Schlauchdichtungen liegt zwischen einem den Siebboden umschließenden unteren Rahmenteil des Kastens und einem unterhalb davon im Behälter ausgebildeten Absatz. Unterhalb von diesem ist die Rotorscheibe angeordnet. Im Betrieb dieser bekannten Wirbelschichtapparatur wird erhitzte, trockene Luft von der Windkammer durch den umlaufenden Rotor und durch den Siebboden hindurch in den Behandlungsraum geblasen, so daß eine darin enthaltene pulverförmige Substanz in ständig umlaufenden Zonen des Behandlungsraumes fluidisiert und getrocknet wird. Diese bekannte Apparatur verschmutzt leicht, da kleine Partikel der zu behandelnden Substanz beim Einschieben des mit dieser Substanz gefüllten schubladenartigen Kastens in die Apparatur durch den Siebboden nach unten in die Windkammer fallen können, ehe das für die Behandlung erforderliche Druckgefälle zwischen Windkammer und Behandlungsraum entstanden ist. Die Apparatur ist insgesamt schwer zu reinigen und entspricht deshalb nicht unbedingt den strengen hygienischen Ansprüchen, die vor allem in der pharmazeutischen Industrie gestellt werden.

Eine andere, aus der DE 2932803 A1 bekannte Wirbelschichtapparatur hat einen Rotor mit einem im axialen Querschnitt U-förmigen Profil, das nach oben durch eine mit Luftaustrittsöffnungen versehene Blende teilweise abgedeckt ist. Der Rotor ist an einer Hohlwelle befestigt und über diese antreibbar sowie an die Druckseite eines Gebläses angeschlossen. Innerhalb der Hohlwelle erstreckt sich eine Flüssigkeitsleitung nach oben, die in einer unmittelbar über dem Siebboden zentral angeordneten ortsfesten Sprühdüse endet. Der Bereich rings um den Rotor unterhalb des Siebbodens ist als Saugkammer ausgebildet und an die Saugseite des Gebläses angeschlossen. Bei dieser Apparatur wird trockene Luft aus der Hohlwelle radial auswärts in das U-förmige Rotorprofil umgelenkt, um von dort aus nach oben, durch den Siebboden hindurch in den Behandlungsraum zu strömen und die darin enthaltene Substanz zu fluidisieren. In die fluidisierte Substanz wird durch die zentrale Düse Flüssigkeit eingesprüht, so daß je nach Beschaffenheit der Substanz und der Flüssigkeit beispielsweise ein Agglomeriergranulat entsteht oder die Partikel der schon granulatförmigen Substanz mit einer Umhüllung versehen werden. Die verbrauchte Luft strömt, wiederum durch den Siebboden hindurch, aus dem Behandlungsraum in die Saugkammer. Diese Apparatur läßt sich besonders leicht pneumatisch mit der zu behandelnden Substanz füllen, so daß insoweit Verschmutzungsgefahren vermeidbar sind. Dennoch treten auch hier Reinigungsprobleme auf, wenn die hygienischen Anforderungen hoch sind.

Aus hygienischer Sicht günstiger ist eine aus der DE 2551578 A1 bekannte Wirbelschichtapparatur, bei der ein Behandlungsraum nach unten durch einen dichten Boden und nach oben durch eine Filteranordnung begrenzt ist. Unmittelbar über dem Boden ist ein zwei- oder mehrflügeliger Rotor angeordnet, der durch eine Hohlwelle angetrieben und an die Druckseite eines Gebläses angeschlossen ist. Die einzelnen Flügel des Rotors sind mit in bezug auf die Drehrichtung nach hinten gerichteten Luftaustrittsöffnungen versehen. Bei einer Ausführungsform dieser bekannten Apparatur ist im Behandlungsraum zentrisch über dem Rotor eine Flüssigkeitsdüse angeordnet. Bei einer anderen Ausführungsform sind Flüssigkeitsdüsen in die Flügel des Rotors derart eingebaut, daß Flüssigkeit gezielt in Zonen des Behandlungsraumes eingesprüht wird, in denen die Substanz durch aus dem Rotor austretende Luft fluidisiert ist.

Beiden aus der DE 2932803 A1 und der DE 2551578 A1 bekannten Apparaturen ist gemeinsam, daß die zur Fluidisierung der Substanz im Behandlungsraum verwendete Luft innerhalb des Rotors mindestens zweimal um je etwa einen rechten Winkel umgelenkt wird, ehe sie in den Behandlungsraum gelangt. Infolgedessen ist ein hoher Energieaufwand erforderlich, um die Luft — oder ein anderes Gas — aus dem Rotor mit einer Geschwindigkeit und in einer Verteilung ausströmen zu lassen, die es ermöglichen, die zu behandelnde Substanz mit einem oder mehreren definierten Gasströmen gewissermaßen zu durchpflügen und dabei eine effiziente Behandlung zu erreichen.

Schließlich ist aus der DE 3107959 A1 eine Wirbelschichtapparatur bekannt, bei der ein Behandlungsraum von einer unter ihm angeordneten Windkammer durch eine glatte Rotorscheibe getrennt ist. Die Rotorscheibe ist innerhalb eines Behälters um eine senkrechte Achse drehbar. Zwischen dem äußeren Rand der Rotorscheibe und der Innenwand des Behälters ist ein Ringspalt vorgesehen, der mit einem ringförmigen, höhenverstellbaren Verschlußglied verschließbar ist. Mittig über dem Rotor ist im Behandlungsraum eine nach unten gerichtete Sprühdüse angeordnet. Zum Einbringen einer zu behandelnden Substanz in den Behandlungsraum nimmt der Verschlußkörper eine Schließstellung ein, aus der er anschließend in eine Öffnungsstellung abgesenkt wird, sobald ein bestimmtes Druckgefälle zwischen Windkammer und Behandlungsraum hergestellt worden ist. Der somit vom Verschlußkörper freigegebene Rotor wird in Drehung versetzt, so daß er die auf ihm liegende Schicht der zu behandelnden Substanz radial nach außen schleudert. Durch den Ringspalt aus der Windkammer in den Behandlungsraum strömende Luft fluidisiert die Substanz in einem radial äußeren Ringbereich des Behandlungsraumes; aus diesem Ringbereich strömt die Substanz weiter oben wieder in einen mittleren Bereich des Behandlungsraumes und fällt auf die Rotorscheibe, von der sie erneut nach außen geschleudert wird. Bei dieser Betriebsweise spielt die Schleuderwirkung des notwendigerweise verhältnismäßig schnell umlaufenden Rotors eine große Rolle. Neben der Fluidisierung durch Luft oder ein anderes Gas hat also mechanische Einwirkung des Rotors und auch der Behälterwand einen erheblichen Anteil an der Behandlung der Substanz. Solche mechanischen Einwirkungen sind jedoch bei manchen Behandlungsvorgängen, insbesondere beim Granulieren, nicht oder nur in engen Grenzen erwünscht.

Der Erfindung liegt die Aufgabe zugrunde, eine Wirbelschichtapparatur derart zu gestalten, daß sie verhältnismäßig leicht sauberzuhalten ist, mit vergleichsweise geringem Energie- und Zeitaufwand je Gewichtseinheit der zu verarbeitenden Substanzen auskommt und sich besonders zum Granulieren schwer fluidisierbarer oder gegen mechanische Einwirkung empfindlicher Substanzen eignet.

Die Aufgabe ist erfindungsgemäß dadurch gelöst, daß

die Rotorscheibe als einzige Trennwand zwischen Windkammer und Behandlungsraum ausgebildet ist,

der bzw. jeder Öffnung der Rotorscheibe ein Verschluß zugeordnet ist, der im normalen Betrieb geöffnet, zum Stillsetzen der Apparatur jedoch verschließbar ist,

über der Rotorscheibe mindestens eine Rückhaltelamelle ortsfest angeordnet ist, die auf dem Rotor liegende Substanz daran hindert, sich mit diesem zu drehen, und

in jedem durch eine der Öffnungen hindurchgetretenen Gasstrom über dessen radiale Länge verteilt, und mit diesem bei Drehung des Rotors mitrotierend, Düsen zum Besprühen der Substanz im Behandlungsraum angeordnet sind.

Durch die Erfindung wird der bei bekannten gattungsgemäßen Vorrichtungen vorhandene Siebboden beseitigt, da die Rotorscheibe mit ihrer mindestens einen verschließbaren Öffnung selber für die in bestimmten Phasen jedes Arbeitszyklus erforderliche Trennung von Windkammer und Behandlungsraum sorgt. Im Betrieb hat der Rotor nur die Aufgabe, den Gasstrom oder die Gasströme, die aus der Windkammer mit im wesentlichen unveränderter, ungefähr achsparalleler Strömungsrichtung durch den Rotor hindurchtretenden Gasströme im Behandlungsraum rotieren zu lassen, so daß sie die Substanz durchpflügen. Hierzu braucht der Rotor nur mit einer geringen Drehzahl angetrieben zu werden, bei der eine Schleuderwirkung der Rotorscheibe vermieden wird. Die über der Rotorscheibe angeordnete, mindestens eine Rückhaltelamelle widersetzt sich im übrigen jeglicher Mitnahme der Substanz, so daß diese im wesentlichen nur der pflügenden Wirkung des in einem oder mehreren Strömen aufsteigenden Gases ausgesetzt ist. Diese Ströme sind, da sie nicht an einem Siebboden gestreut werden, verhältnismäßig scharf begrenzt und wirken deshalb ähnlich wie Pflugscharen.

Die erfindungsgemäße Apparatur kann in der Weise ausgestaltet sein, daß

der Verschluß eine Verschlußscheibe aufweist, die gleichachsig mit der Rotorscheibe angeordnet, gegen diese verdrehbar und ebenfalls mit mindestens einer Öffnung versehen ist, und

die Öffnungen beider Scheiben in einer Betriebsstellung miteinander fluchten, in einer Ruhestellung der beiden Scheiben in bezug zueinander jedoch abgedeckt sind.

Bei der im vorstehenden beschriebenen Ausgestaltung kann ein beispielsweise mechanischer oder pneumatischer Antrieb für die Relativdrehung der Verschlußscheibe in bezug auf die Rotorscheibe vorgesehen sein. Einfacher ist es jedoch, wenn

die Verschlußscheibe über der Rotorscheibe angeordnet und gegen diese zwischen Anschlägen frei drehbar ist, derart daß,

die Verschlußscheibe durch eine von der Substanz auf sie ausgeübte Bremswirkung bei Vorwärtsdrehung des Rotors die Betriebsstellung und bei Rückwärtsdrehung die Ruhestellung einnimmt.

Bei einer anderen Ausführungsform der Erfindung ist an jeder Öffnung als Verschluß ein in radialer Richtung langgestreckter Ventilkörper angeordnet. Dieser kann entweder am Rotor höhenverstellbar angeordnet oder aufblähbar sein, um seine Schließwirkung auszuüben.

Die erfindungsgemäß vorgesehene mindestens eine Rückhaltelamelle kann ihre Rückhaltewirkung in besonders schonender Weise ausüben, wenn sie in einem Abstand über dem Rotor angeordnet ist, der erheblich größer ist als die größte Abmessung, welche die Partikel der fertig behandelten Substanz, beispielsweise in Form eines Granulats, erreichen. Es kann jedoch auch vorteilhaft sein, wenn unmittelbar über dem Rotor mehrere radiale Rückhaltelamellen ortsfest angeordnet sind. Solche Rückhaltelamellen, die zwischen sich und der Oberseite des Rotors nur einen im Verhältnis zur Partikelgröße kleinen Spalt freilassen, können wesentlich dazu beitragen, die Oberfläche des Rotors ständig sauberzuhalten.

Dabei ist es zweckmäßig, wenn die Rückhaltelamellen durch mindestens einen mit dem Rotor gleichachsigen Ring miteinander verbunden sind.

Es ist ferner vorteilhaft, wenn die bzw. jede Öffnung des Rotors von Seitenwänden begrenzt ist, die in je einer mindestens annähernd senkrechten Ebene angeordnet sind, und deren Höhe mindestens so groß ist wie ihr Abstand voneinander. Die Seitenwände können erheblich dazu beitragen, den bzw. jeden Gasstrom, der den Rotor nach oben verläßt, scharf zu begrenzen und damit seine pflügende Wirkung zu fördern.

Schließlich ist es vorteilhaft, wenn die Ventilkörper unterhalb der zugehörigen Seitenwände zwischen zwei nach oben konvergierenden Leitplatten aufgehängt sind.

Ausführungsbeispiele der Erfindung werden im folgenden anhand schematischer Zeichnungen mit weiteren Einzelheiten beschrieben. Es zeigt:

Fig. 1 eine teilweise als achsparalleler Schnitt gezeichnete Seitenansicht eines ersten Ausführungsbeispiels einer erfindungsgemäßen Wirbelschichtapparatur,

Fig. 2 einen vergrößerten Ausschnitt aus Fig. 1,

Fig. 3 den axialen Teilschnitt III-III in Fig. 1,

Fig. 4 den achsnormalen Schnitt IV-IV in Fig. 1,

Fig. 5 den achsnormalen Teilschnitt V-V in Fig. 1,

Fig. 6 den Schnitt VI-VI in Fig. 5,

Fig. 7 eine der Fig. 1 entsprechende Ansicht eines zweiten Ausführungsbeispiels einer erfindungsgemäßen Wirbelschichtapparatur und

Fig. 8 einen vergrößerten Ausschnitt aus Fig. 7.

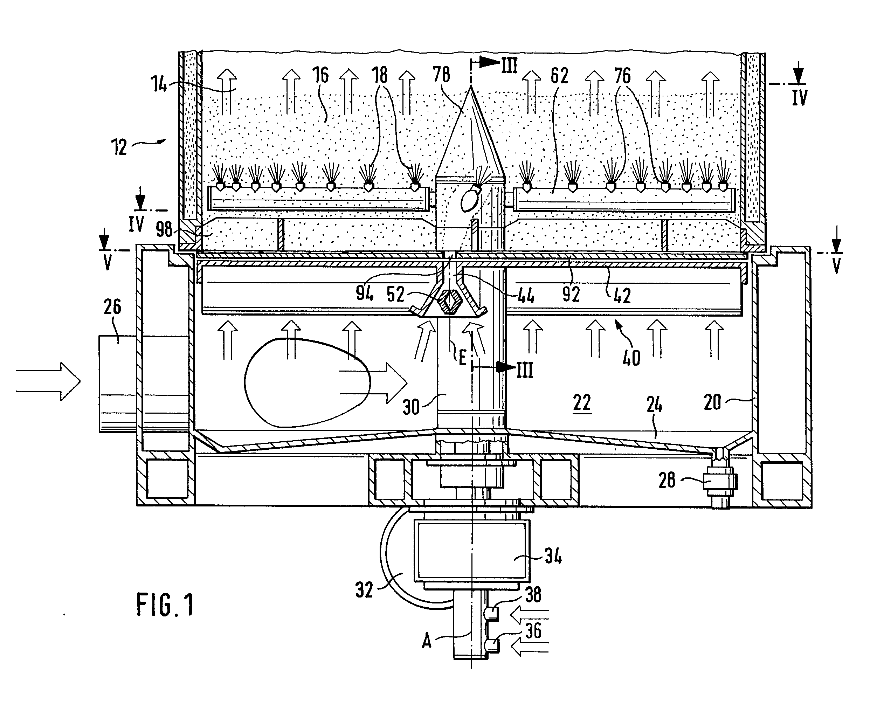

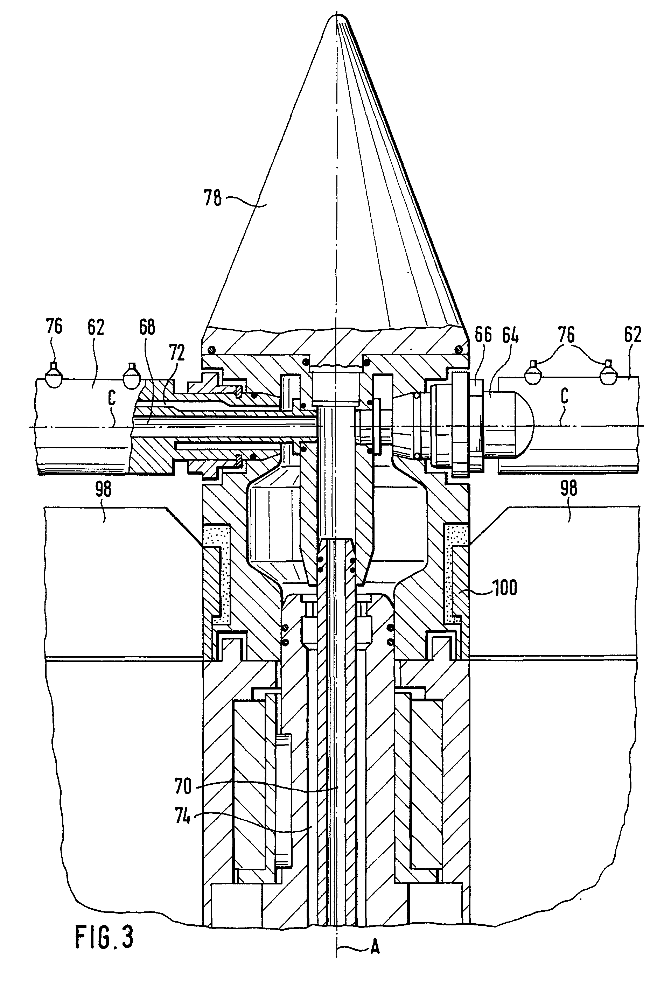

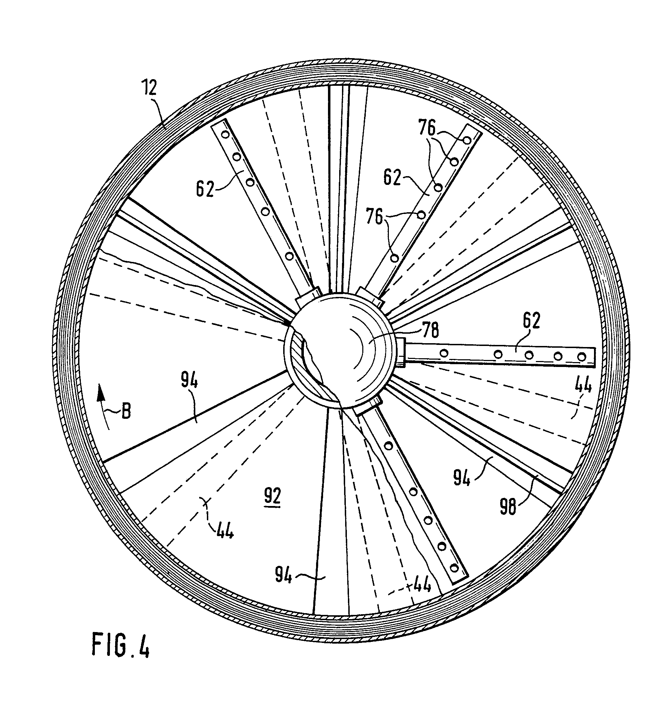

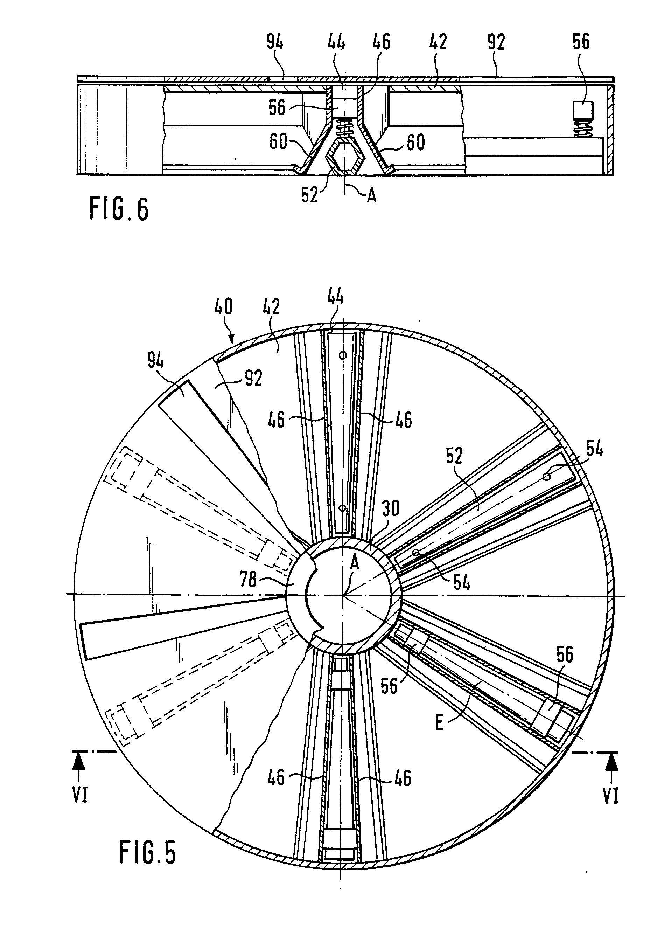

Beide in Fig. 1 bis 6 bzw. Fig. 7 und 8 dargestellten Wirbelschichtapparaturen haben ein Untergestell 10, das einen Behälter 12 trägt. Der Behälter 12 enthält einen kreiszylindrischen Behandlungsraum 14, der im Betrieb teilweise mit einer zu behandelnden Substanz 16 gefüllt ist. Die Substanz 16 ist beispielsweise pulverförmig und soll in fluidisiertem Zustand mit Flüssigkeit 18 besprüht werden, um ein Granulat zu bilden. Der Behälter 12 ist von üblicher Bauart und deshalb nur in seinem hier interessierenden unteren Bereich dargestellt. Der Behandlungsraum 14 ist zweckmäßigerweise nach oben hin durch eine Filteranordnung begrenzt; Beispiele solcher Anordnungen sind aus den eingangs genannten Druckschriften US 3849900 und DE 2551578 bekannt.

Das Untergestell 10 hat einen kreiszylindrischen Mantel 20, der eine Windkammer 22 umschließt. Diese ist nach unten durch einen Boden 24 begrenzt und weist einen Zuluftstutzen 26 auf, durch den ein Gas, beispielsweise trockene warme Luft, zum Fluidisieren der Substanz 16 eingeleitet werden kann. Am Boden 24 ist ein Ablaßventil 28 angeordnet. Durch den Boden 24 erstreckt sich eine hohle Welle 30 mit senkrechter geometrischer Achse A hindurch. Die Welle 30 ist von einem Motor 32 über ein stufenlos einstellbares Getriebe 34 drehantreibbar. Am unteren Ende der hohlen Welle 30 ist ein Flüssigkeitseinlaß 36 sowie ein Drucklufteinlaß 38 angeordnet.

An der Welle 30 ist ein Rotor 40 befestigt, der als obere Begrenzung der Windkammer 22 eine kreisförmige Rotorscheibe 42 aufweist. Der Außendurchmesser der Rotorscheibe 42 ist annähernd so groß wie der Innendurchmesser des Mantels 20, und ist im dargestellten Beispiel etwas größer als der Innendurchmesser des Behälters 12, der unmittelbar über der Rotorscheibe 42 beginnt. Der Rotor 40 hat mehrere, im dargestellten Beispiel sechs, Öffnungen 44, die in gleichen Winkelabständen von im dargestellten Beispiel 60° gegeneinander versetzt sind und die Form je eines schmalen Kreisringsektors haben.

Jede der Öffnungen 44 ist durch ein Paar senkrechte, radial nach außen divergierende Seitenwände 46 begrenzt, die sich von der hohlen Welle 30 bis zu einem kreiszylindrischen äußeren Kragen 48 erstrecken. Die Seitenwände 46 und der äußere Kragen 48 sind oben durch die Rotorscheibe 42 miteinander verbunden, die entsprechend den Öffnungen 44 ausgespart ist, so daß jede der Öffnungen einen senkrechten Gasstrom 50 von kreissektorförmigem Querschnitt aus der Windkammer 22 nach oben austreten läßt, wenn durch ein Gebläse, an das der Zuluftstutzen 26 angeschlossen ist, ein entsprechendes Druckgefälle von der Windkammer 22 zum Behandlungsraum 14 erzeugt wird.

Unterhalb jeder der Öffnungen 44 ist ein Ventilkörper 52 mit einem Paar Stangen 54 am Rotor 40 aufgehängt und nach oben verschiebbar geführt. Jeder der Ventilkörper 52 erstreckt sich in der gleichen radialen Richtung wie die zugehörige Öffnung 44 und hat wie diese einen sich mit zunehmendem Abstand von der Achse A vergrößernden Querschnitt. Die Stangen 54 sind an je einer schmalen Brücke 56, welche die zugehörige Öffnung 44 überbrückt, höheneinstellbar befestigt. Zu diesem Zweck ist ein oberer Abschnitt jeder Stange 54 mit einem Außengewinde und die zugehörige Brücke 56 mit einem Innengewinde versehen. Rings um jede Stange 54 ist eine Feder 58 angeordnet, die sich an der Unterseite der zugehörigen Brücke 56 abstützt und bestrebt ist, den Ventilkörper 52 gegen die Wirkung des erwähnten Druckgefälles in seiner durch die eingestellte Länge der Stangen 54 festgelegten unteren Endstellung zu halten.

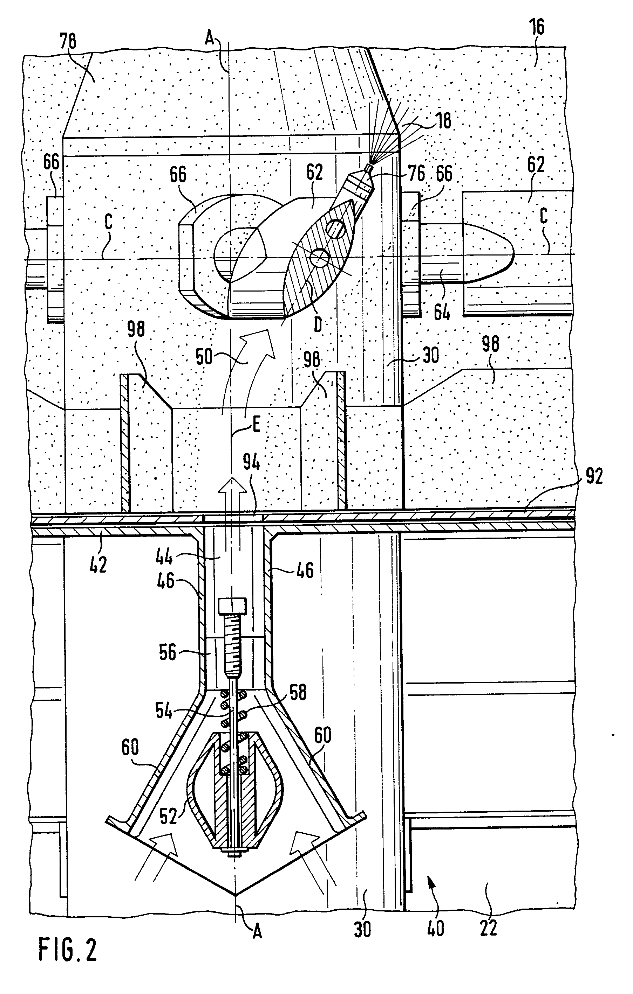

Jeder der Ventilkörper 52 ist genau mittig zwischen zwei Leitplatten 60 angeordnet, die sich vom zugehörigen Paar Seitenwände 46 nach unten erstrecken und im Querschnitt gemäß Fig. 2 nach unten divergieren. Zwischen jeder der Leitplatten 60 und dem zugehörigen Ventilkörper 52 bleibt ein radialer Schlitz frei, dessen Breite abnimmt, wenn der Ventilkörper 52 sich infolge eines übermäßigen Druckgefälles zwischen seiner Unterseite und seiner Oberseite gegen sein Eigengewicht und gegen den Druck der zugehörigen Federn 58 nach oben verschiebt.

In einem Abstand oberhalb des Rotors 40 sind an der Welle 30 mehrere Arme 62 befestigt, die sich oberhalb je einer der Öffnungen 44 radial nach außen bis nahe an die Innenwand des Behälters 12 erstrecken. Die Anzahl der Arme 62 stimmt mit der Anzahl der Öffnungen 44 überein; im dargestellten Beispiel sind also sechs Arme 62 in gleichen Abständen von 60° gegeneinander versetzt angeordnet. Bezogen auf die Betriebsdrehrichtung B des Rotors 40 ist jeder der Arme 62 gegen die zugehörige, unter ihm angeordnete Öffnung 44 geringfügig nach hinten versetzt.

Jeder der Arme 62 hat ein rohrförmiges Anschlußstück 64, das in eine radiale Bohrung der Welle 30 eingesetzt und mit einer Mutter 66 festgeschraubt ist. Nach Lösen seiner Mutter 66 läßt sich jeder Arm 62 um seine in bezug auf die Welle 30 radiale Achse C drehen. Das Profil des Arms 62 ist, wie vor allem Fig. 2 zeigt, dem Profil eines Tragflügels ähnlich; es hat eine Symmetrieebene D, welche die Ebene der Rotorscheibe 42 ungefähr in der Mittelebene E der zugehörigen Öffnung 44 schneidet.

Innerhalb jedes Arms 62 ist ein zentraler Kanal 68 ausgebildet, der über einen axialen Kanal 70 in der Welle 30 mit dem Flüssigkeitseinlaß 36 verbunden ist. Ein weiterer Kanal 72 in jedem Arm 62 ist über einen weiteren Kanal 74 in der Welle 30 mit dem Drucklufteinlaß 38 verbunden. An einem bezüglich der Drehrichtung B der Welle 30 schräg nach hinten oben weisenden Rand jedes Arms 62 sind mehrere Düsen 76 angeordnet, deren Achsen in der Symmetrieebene D des zugehörigen Arms 62 liegen und sich im rechten Winkel zu dessen Achse C erstrecken. Die Düsen 76 sind Zweistoffdüsen, in denen eine durch den Flüssigkeitseinlaß 38 zugeführte Flüssigkeit mit Druckluft versprüht wird. Die Abstände zwischen je zwei Düsen 76 nehmen mit zunehmendem Abstand von der Achse A ab, damit in alle Bereiche des Behandlungsraumes 14 ungefähr gleiche Flüssigkeitsmengen je Flächeneinheit eingesprüht werden.

Die Welle 30 hat ein kegelförmiges oberes Ende 78, dessen Spitze bis in den Bereich der normalen Obergrenze der im Behandlungsraum 14 fluidisierten Substanz 16 reicht.

Gemäß Fig. 1 bis 6 liegt unmittelbar auf der Rotorscheibe 42 eine mit ihr deckungsgleiche Verschlußscheibe 92 auf. Die Verschlußscheibe 92 ist also ebenfalls kreisförmig und hat sechs in gleichen Abständen voneinander angeordnete kreisringsektorförmige Öffnungen 94, die in einer Betriebsstellung der Verschlußscheibe 92 vollständig mit den Öffnungen 44 fluchten, so daß Gasströme 50 den Rotor 40 so durchströmen können, als wäre die Verschlußscheibe 92 nicht vorhanden. Bei Vorwärtsdrehung ist die Verschlußscheibe 92 durch einen nicht dargestellten Anschlag, beispielsweise einen radialen Vorsprung der Welle 30, derart gehalten, daß sie sich mit der Rotorscheibe 42 dreht, ohne ihre Betriebsstellung zu verlassen. Durch eine kurze Rückwärtsdrehung der Welle 30 läßt sich die Verschlußscheibe 92 jedoch in bezug auf die Rotorscheibe 42 in eine Ruhestellung verdrehen, die ebenfalls durch einen nicht dargestellten Anschlag festgelegt ist. In der Ruhestellung verdeckt die Verschlußscheibe 92 sämtliche Öffnungen 44 der Rotorscheibe 42, und diese verdeckt sämtliche Öffnungen 94 der Verschlußscheibe 92. Dadurch ist der Behälter 12 von der Windkammer 22 getrennt.

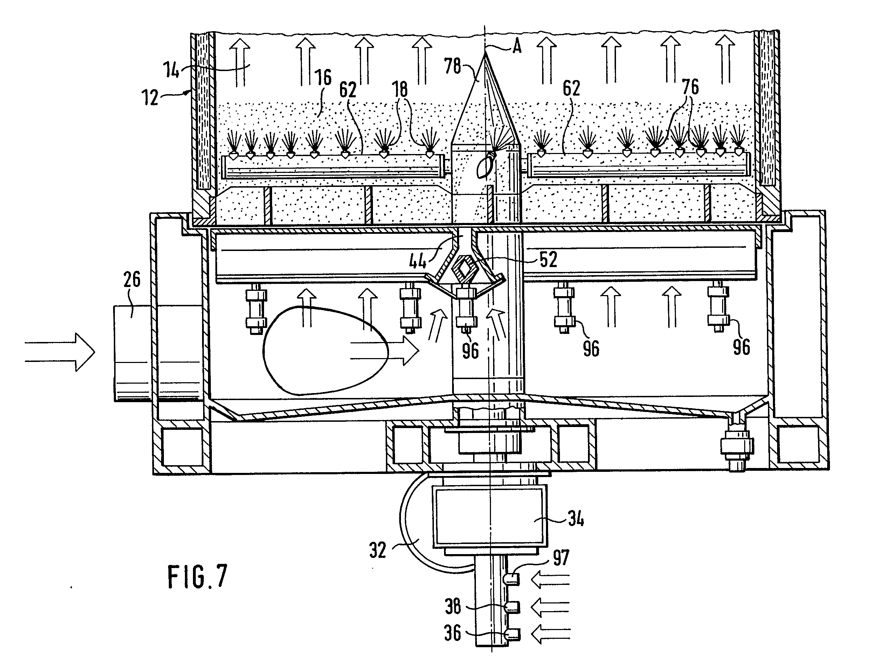

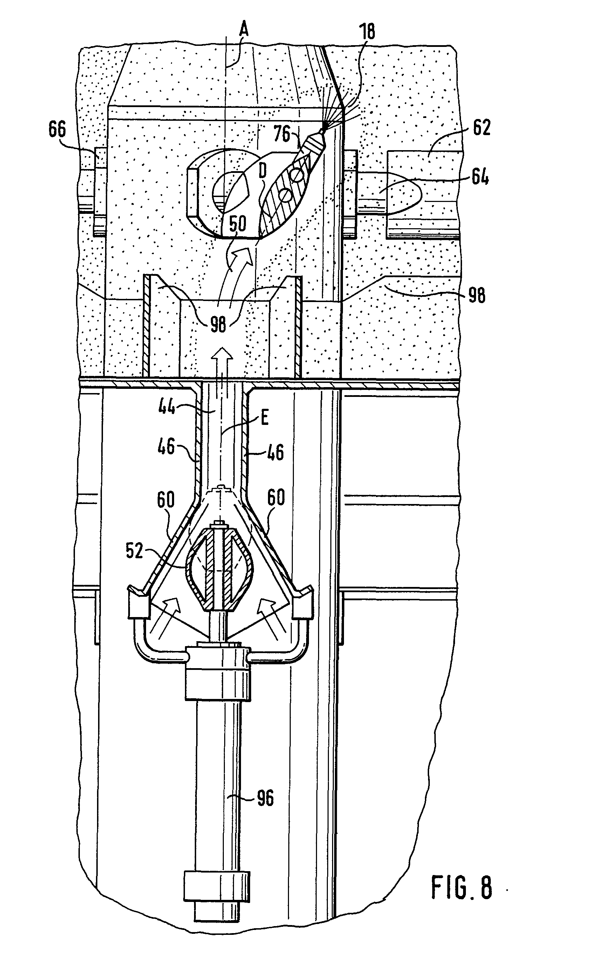

Das Ausführungsbeispiel gemäß Fig. 7 und 8 unterscheidet sich von dem in Fig. 1 bis 6 dargestellten dadurch, daß die Ventilkörper 52 mittels pneumatischer Kolbenzylindereinheiten 96 höhenverstellbar sind, und zwar zwischen ihrer in Fig. 7 und 8 mit vollen Linien dargestellten normalen Betriebsstellung und einer in Fig. 8 mit gestrichelten Linien angedeuteten Schließstellung. In der Schließstellung schließt jeder Ventilkörper 52 die ihm zugeordnete Öffnung 44 des Rotors 40 vollständig ab, so daß der Behandlungsraum 14 von der Windkammer 22 getrennt ist. Die Kolbenzylindereinheiten 96 werden über einen gemeinsamen, an der Welle 30 unten angeordneten Druckluftanschluß 97 gesteuert.

Beide dargestellten Ausführungsbeispiele der Erfindung ermöglichen es, die zu behandelnde Substanz 16 in beliebiger Weise, beispielsweise einfach durch Einschütten, in den Behandlungsraum 14 einzubringen, ohne daß dabei Teile der Substanz in die Windkammer 22 rieseln und diese verschmutzen könnten. Im Betrieb hingegen lassen die Öffnungen 44 im Rotor 40 bei beiden dargestellten Ausführungsbeispielen scharf begrenzte, mindestens annähernd senkrecht nach oben gerichtete Luftströme entstehen, die durch die beschriebenen Verschlüsse nicht gestört werden.

Beiden dargestellten Ausführungsbeispielen ist ferner gemeinsam, daß unmittelbar über dem Rotor 40 Rückhaltelamellen 98 ortsfest angeordnet sind. Die Rückhaltelamellen 98 liegen in je einer die Achse A enthaltenden Ebene, sind außen am Behälter 12 befestigt und radial innen durch einen auf der Welle 30 gelagerten Ring 100 zusammengehalten. Zwischen der Oberfläche der Rotorscheibe 42 beim Ausführungsbeispiel gemäß Fig. 1 bis 6 bzw. der Oberfläche der Verschlußscheibe 92 beim Ausführungsbeispiel gemäß Fig. 7 und 8 und den Unterkanten der Rückhaltelamellen 98 besteht ein Abstand von vorzugsweise nur wenigen Zehntel Millimetern.

**Patentansprüche**

1. Wirbelschichtapparatur, insbes. zum Granulieren pulverförmiger Substanz, mit einem Behälter (12), in dem ein Behandlungsraum (14) für die Substanz (16), und unterhalb davon eine Windkammer (22) angeordnet ist, und einem Rotor (40) mit einer kreisförmigen Rotorscheibe (42), die die Windkammer (22) nach oben begrenzt, um eine aufrechte zentrale Achse (A) drehantreibbar ist und mindestens eine in ungefähr radialer Richtung langgestreckte Öffnung (44) aufweist, die einen Gasstrom (50) von der Windkammer (22) in den Behandlungsraum (14) zuläßt, dadurch gekennzeichnet, daß die Rotorscheibe (42) als einzige Trennwand zwischen Windkammer (22) und Behandlungsraum (14) ausgebildet ist, der bzw. jeder Öffnung (44) der Rotorscheibe (42) ein Verschluß zugeordnet ist, der im normalen Betrieb geöffnet, zum Stillsetzen der Apparatur jedoch verschließbar ist, über der Rotorscheibe (42) mindestens eine Rückhaltelamelle (98) ortsfest angeordnet ist, die auf dem Rotor (40) liegende Substanz daran hindert, sich mit diesem zu drehen, und in jedem durch eine der Öffnungen (44) hindurchgetretenen Gasstrom (50), über dessen radiale Länge verteilt und mit diesem bei Drehung des Rotors (40) mitrotierend, Düsen (76) zum Besprühen der Substanz (16) im Behandlungsraum (14) angeordnet sind.

2. Wirbelschichtapparatur nach Anspruch 1, dadurch gekennzeichnet, daß der Verschluß eine Verschlußscheibe (92) aufweist, die gleichachsig mit der Rotorscheibe (42) angeordnet, gegen diese verdrehbar und ebenfalls mit mindestens einer Öffnung (94) versehen ist, und die Öffnungen (44, 94) beider Scheiben (42, 92) in einer Betriebsstellung miteinander fluchten, in einer Ruhestellung der beiden Scheiben (42, 92) in bezug zueinander jedoch abgedeckt sind.

3. Wirbelschichtapparatur nach Anspruch 2, dadurch gekennzeichnet, daß die Verschlußscheibe (92) über der Rotorscheibe (42) angeordnet und gegen diese zwischen Anschlägen frei drehbar ist, derart, daß die Verschlußscheibe (92) durch eine von der Substanz (16) auf sie ausgeübte Bremswirkung bei Vorwärtsdrehung des Rotors (40) die Betriebsstellung und bei Rückwärtsdrehung die Ruhestellung einnimmt.

4. Wirbelschichtapparatur nach Anspruch 1, dadurch gekennzeichnet, daß an jeder Öffnung (44) als Verschluß ein in radialer Richtung langgestreckter Ventilkörper (52) angeordnet ist.

5. Wirbelschichtapparatur nach Anspruch 4, dadurch gekennzeichnet, daß die Ventilkörper (52) am Rotor (40) höhenverstellbar angeordnet sind.

6. Wirbelschichtapparatur nach Anspruch 4, dadurch gekennzeichnet, daß die Ventilkörper (52) aufblähbar sind.

7. Wirbelschichtapparatur nach einem der Ansprüche 1 bis 6, dadurch gekennzeichnet, daß unmittelbar über dem Rotor (40) mehrere radiale Rückhaltelamellen (98) ortsfest angeordnet sind.

8. Wirbelschichtapparatur nach Anspruch 7, dadurch gekennzeichnet, daß die Rückhaltelamellen (98) durch mindestens einen mit dem Rotor (40) gleichachsigen Ring (100) miteinander verbunden sind.

9. Wirbelschichtapparatur nach einem der Ansprüche 1 bis 8, dadurch gekennzeichnet, daß die bzw. jede Öffnung (44) des Rotors (40) von Seitenwänden (46) begrenzt ist, die in je einer mindestens annähernd senkrechten Ebene angeordnet sind, und deren Höhe mindestens so groß ist wie ihr Abstand voneinander.

10. Wirbelschichtapparatur nach den Ansprüchen 4 und 9, dadurch gekennzeichnet, daß die Ventilkörper (52) unterhalb der zugehörigen Seitenwände (46) zwischen zwei nach oben konvergierenden Leitplatten (60) aufgehängt sind.

## Revendications

1. Appareil à lit fluidisé, notamment pour la granulation d'une matière pulvérulente, comportant:

un récipient (12), dans lequel sont disposés un volume de traitement (14) pour la matière (16) et, en dessous de lui, une chambre à vent (22), et un rotor (40) pourvu d'un disque (42) de forme circulaire, qui délimite vers le haut la chambre à vent (22), qui peut être entraîné en rotation autour d'un axe central vertical (A) et qui comporte au moins un orifice (44) de profil allongé dans une direction sensiblemènt radiale et qui permet le passage d'un courant de gaz (50) de la chambre à vent (22) dans le volume de traitement (14), caractérisé en ce que:

le disque de rotor (42) est agencé comme une paroi séparatrice unique entre la chambre à vent (22) et le volume de traitement (14), la ou chaque ouverture (44) du disque de rotor (42) est associée à un obturateur qui est ouvert en marche normale et qui peut cependant être fermé pour arrêter l'appareil, au-dessus du disque de rotor (42), il est prévu en position fixe au moins une lamelle de retenue (98) qui empêche la matière reposant sur le rotor (40) de tourner avec lui, et dans chaque courant de gaz (50) passant par un des orifices (44), il est prévu des buses (76), réparties sur la longueur radiale de ce courant, tournant avec celui-ci lors de la rotation du rotor (40) et servant à la pulvérisation de la matière (16) dans le volume de traitement (14).

2. Appareil à lit fluidisé selon la revendication 1, caractérisé en ce que:

l'obturateur comporte un disque d'obturation (92), qui est disposé coaxialement au disque de rotor (42), qui peut tourner par rapport à celui-ci et qui est également pourvu d'au moins un orifice (94), et les orifices (44, 94) des deux disques (42, 92) sont mutuellement en coïncidence dans une position de service alors que cependant, dans une position de repos des deux disques (42, 92), ils sont mutuellement décalés.

3. Appareil à lit fluidisé selon la revendication 2, caractérisé en ce que:

le disque d'obturation (92) est disposé au-dessus du disque de rotor (42) et peut tourner librement par rapport à celui-ci entre des butées de telle sorte que le disque obturateur (92) prenne, sous l'effet d'une action de freinage exercée sur lui par la matière (16) lors d'une rotation vers l'avant du rotor (40), la position de service et, lors d'une rotation vers l'arrière, la position de repos.

4. Appareil à lit fluidisé selon la revendication 1, caractérisé en ce qu'il est prévu pour chaque orifice (44), comme obturateur, un corps de soupape (52) de profil allongé dans une direction radiale.

5. Appareil à lit fluidisé selon la revendication 4, caractérisé en ce que les corps de soupapes (52) sont disposés sur le rotor (40) en étant réglables en hauteur.

6. Appareil à lit fluidisé selon la revendication 4, caractérisé en ce que les corps de soupapes (52) sont gonflables.

7. Appareil à lit fluidisé selon une des revendications 1 à 6, caractérisé en ce qu'il est prévu, directement au-dessus du rotor (40), plusieurs lamelles radiales de retenue (98) qui sont fixes.

8. Appareil à lit fluidisé selon la revendication 7, caractérisé en ce que les lamelles de retenue (98) sont reliées entre elles par au moins un anneau (100) coaxial au rotor (40).

9. Appareil à lit fluidisé selon une des revendications 1 à 8, caractérisé en ce que le ou chaque orifice (44) du rotor (40) est délimité par des parois latérales (46), qui sont chacune disposées dans un plan au moins approximativement vertical et dont la hauteur est au moins aussi grande que leur espacement mutuel.

10. Appareil à lit fluidisé selon les revendications 4 et 9, caractérisé en ce que les corps de soupapes (52) sont suspendus, en dessous des parois latérales associées (46), entre deux plaques directrices (60) convergeant vers le haut.

**Claims**

1. Fluidized bed apparatus, in particular for granulation of pulverulent substance, comprising:

a container (12) in which a treatment space (14) is arranged for the substance (16) and therebelow a wind chamber (22), and a rotor (40) having a circular rotor disc (42) which defines the wind chamber (22) at the top, is rotatably drivable about an upright central axis (A) and comprises at least one opening (44) which is elongated in approximately radial direction and which permits a gas flow (50) from the wind chamber (22) into the treatment space (14), characterized in that the rotor disc (42) is constructed as single partition between wind chamber (22) and treatment space (14), a closure means is associated with the or each opening (44) of the rotor disc (42) and is open in normal operation but can be closed for stopping the apparatus, above the rotor disc (42) at least one retaining blade (98) is stationarily arranged which prevents the substance lying on the rotor (40) from rotating with the latter and nozzles (76) for spraying the substance (16) in the treatment space (14) are arranged in each gas stream (50) which has passed through one of the openings (44), said nozzles (76) being distributed over the radial length of said stream and rotating therewith on rotation of the rotor (40).

2. Fluidized bed apparatus according to claim 1, characterized in that the closure means comprises a closure disc (92) which is arranged coaxially with the rotor disc (42), is rotatable with respect to the latter and is likewise provided with at least one opening (94), and the openings (44, 94) of the two discs (42, 92) align with each other in an operating position but are covered with respect to each other in a rest position of the two discs (42, 92).

3. Fluidized bed apparatus according to claim 2, characterized in that the closure disc (92) is arranged above the rotor disc (42) and is freely rotatable with respect to the latter between stops in such a manner that the closure disc (92) on forward rotation of the rotor (40) assumes the operating position due to a braking action exerted on said disc by the substance (16) and on rearward rotation assumes the rest position.

4. Fluidized bed apparatus according to claim 1, characterized in that at each opening (44) as closure means a valve body (52) elongated in radial direction is arranged.

5. Fluidized bed apparatus according to claim 4, characterized in that the valve bodies (52) are arranged vertically adjustably on the rotor (40).

6. Fluidized bed apparatus according to claim 4, characterized in that the valve bodies (52) are inflatable.

7. Fluidized bed apparatus according to any one of claims 1 to 6, characterized in that directly above the rotor (40) a plurality of radial retaining blades (98) are arranged stationarily.

8. Fluidized bed apparatus according to claim 7, characterized in that the retaining blades (98) are connected together by at least one ring (100) coaxial with the rotor (40).

9. Fluidized bed apparatus according to any one of claims 1 to 8, characterized in that the or each opening (44) of the rotor (40) is defined by side walls (46) which are each arranged in at least approximately vertical plane and the height of which is at least as great as their distance from each other.

10. Fluidized bed apparatus according to claims 4 and 9, characterized in that the valve bodies (52) are suspended beneath the associated side walls (46) between two upwardly converging guide plates (60).

FIG.1

FIG.2

FIG.3

FIG.4

FIG.6

FIG.5

5

FIG.7

FIG. 8